# EUROPÄISCHE PATENTSCHRIFT

(11) **EP 1 268 870 B1**
(45) Veröffentlichungstag und Bekanntmachung des Hinweises auf die Patenterteilung: **08.10.2003**
(21) Anmeldenummer: 01933770.8
(22) Anmeldetag: 28.03.2001
(51) Int. Cl.: C23C 2/40

(54) **BESCHICHTUNGSVORRICHTUNG**
COATING INSTALLATION
DISPOSITIF DE revêtement

(30) Priorität: 06.04.2000 DE 20006302 U
(43) Veröffentlichungstag der Anmeldung: 02.01.2003
(73) Patentinhaber: Band-Zink GmbH, 40764 Langenfeld (DE)
(72) Erfinder: PLÄTZER, Wilfried, 47809 Krefeld (DE)
(74) Vertreter: Selting, Günther, Dipl.-Ing.
(86) Internationale Anmeldenummer: EP0103516
(87) Internationale Veröffentlichungsnummer: WO01077401

(56) Entgegenhaltungen:
- US-A- 1 777 139
- PATENT ABSTRACTS OF JAPAN vol. 015, no. 461 (C-0887), 22. November 1991 (1991-11-22) & JP 03 197658 A (SUMITOMO METAL IND LTD), 29. August 1991 (1991-08-29)

## Beschreibung

Die Erfindung bezieht sich auf eine Beschichtungsvorrichtung zum Beschichten eines Metallbandes in einer Schmelze eines nicht-magnetischen Metalles.

Beschichtungsvorrichtungen zur Metallbandbeschichtung werden beispielsweise zur Verzinkung von Metallbändern und Blechen eingesetzt. Das Metallband wird dazu durch eine ca. 450°C heiße Zinkschmelze hindurchgezogen: Das Metallband taucht nach unten fortlaufend in die Zinkschmelze ein, wird durch eine rotierende Welle in der Schmelze nach oben umgelenkt und läuft nach oben wieder aus der Zinkschmelze heraus. Die Lagerung der Welle in der Schmelze erfolgt in offenen Gleitlagern, die wegen der großen auftretenden Kräfte, der hohen Temperatur der Zinkschmelze und der hohen chemischen Aggressivität der Zinkschmelze starkem Verschleiß unterliegen. Bei einer pausenlos laufenden Beschichtungsanlage sind die Gleitlager bereits nach wenigen Tagen so stark verschlissen, dass sie ausgetauscht werden müssen. Für den Austausch der beiden Lager einer Umlenkrolle werden mehrere Stunden benötigt, was bei Beschichtungsanlagen mit einem Wert von 100 bis 200 Mio. DM einen großen Kostenfaktor darstellt.

Aufgabe der Erfindung ist es, die Standzeit der in der Schmelze drehbaren Welle zu vergrößern.

Diese Aufgabe wird erfindungsgemäß mit den Merkmalen des Anspruchs 1 gelöst.

Bei der erfindungsgemäßen Beschichtungsvorrichtung ist das Wellenlager als Magnetlager ausgebildet, dessen feststehendes Lagerteil gekapselt ist. Durch das Magnetlager wird ein Wellenzapfen der Welle berührungslos in dem Lagerteil gehalten. Durch die berührungslose Lagerung wird der mechanische Abrieb an dem feststehenden Lagerteil und an dem Wellenzapfen auf ein Minimum reduziert. Die Beschichtung der Lagerteile muss nicht mehr, wie bei Gleitlagern, im Hinblick auf möglichst geringen Abrieb optimiert werden, sondern kann mit einer Beschichtung versehen werden, die sich durch eine gute chemische Beständigkeit gegen die Metallschmelze auszeichnet. Da beispielsweise eine Zinkschmelze bei einer Arbeitstemperatur von 450 bis 470°C wie eine Säure wirkt, wird durch die säurebeständige Beschichtung des Wellenlagers, die keinem nennenswerten Abrieb mehr unterliegt, Korrosion an dem Wellenlager erheblich vermindert. Durch die berührungslose Lagerung wird also mechanischer Abrieb der Lagerteile weitgehend vermieden, was den Einsatz preiswerter säurebeständiger Beschichtungen für die Lagerteile ermöglicht und die Korrosion vermindert. Durch diese beiden Effekte wird die Standzeit der Wellenlager auf ein Vielfaches der Standzeit von Gleitlagern erhöht. Die Standzeit der Magnetwellenlager in einer Zinkschmelze kann sich durch Verwendung von Magnetlagern auf mehrere Wochen vergrößern.

Zwischen dem gekapselten feststehenden Lagerteil und dem Wellenzapfen der Welle verbleibt ein offener umlaufender Spalt, so dass der Wellenzapfen in dem feststehenden Lagerteil in der Schwebe gehalten werden kann und der Wellenzapfen das feststehende Lagerteil nicht berührt. Dadurch wird ein sehr widerstandsarmes Rotieren der Welle ermöglicht. Da das Magnetfeld in dem umlaufenden Spalt zwischen dem feststehenden Lagerteil und dem Wellenzapfen nicht abgeschirmt werden darf, eignet sich das Magnetlager nur zum Einsatz in Schmelzen von nicht-magnetischen Metallen, wie beispielsweise Zink.

Als Kapselung des feststehenden Lagerteiles ist ein Lagergehäuse aus nicht-magnetischem und hochtemperaturbeständigem Material vorgesehen, dessen Schmelzpunkt über 600°C liegt. Die Kapselung kann beispielsweise durch ein Edelstahlgehäuse realisiert sein.

Vorzugsweise wird das Lagergehäuse mit Kühlgas zur Kühlung der Magnetelemente des feststehenden Lagerteiles versorgt. Bei den Magnetelementen handelt es sich in der Regel um Elektromagnete, deren Wirkungsgrad bei niedrigen Arbeitstemperaturen größer ist, d.h. deren erzeugte Magnetfelder bei niedrigen Arbeitstemperaturen stärker sind. Ferner kann in dem Lagergehäuse ein Gasdrucksensor zur Feststellung von Gasleckströmen vorgesehen sein. Dies kann beispielsweise ein Drucksensor sein, der den Gasdruck innerhalb des Lagergehäuses erfaßt. Ein Druckabfall in dem Lagergehäuse würde auf eine Undichtigkeit des Lagergehäuses hindeuten, so dass Beschädigungen des Lagergehäuses frühzeitig erkannt und größere Schäden vermieden werden können. Das Kühlgas wird mit Überdruck in das Lagergehäuse eingeleitet, so dass es durch gegebenenfalls vorhandene Undichtigkeiten des Lagergehäuses nach außen durchtritt und auf diese Weise das Eindringen der Metallschmelze in das Lagergehäuse verhindert, so dass schwere Beschädigungen des Magnetlagers vermieden werden.

Vorzugsweise ist die Welle eine Tauchrolle zur Umlenkung oder Führung des Metallbandes in einer Zinkschmelze. Die Welle kann aber auch als Führungsrolle zur Regulierung der Bandspannung oder zur genauen Positionierung des Metallbandes ausgebildet sein.

Gemäß einer bevorzugten Ausgestaltung weist das Wellenlager einen Notlauf-Keramikeinsatz auf. Der Keramikeinsatz ist an der Innenseite des Lagergehäuses angebracht, so dass bei Ausfall der Magnetelemente des feststehenden Lagerteiles der Wellenzapfen der Welle auf dem Keramikeinsatz läuft. Nur der gegenüber dem Keramikeinsatz weichere Wellenzapfen der Welle kann dabei abgeschliffen bzw. beschädigt werden. Der Wellenzapfen kann anschließend relativ einfach repariert oder ausgetauscht werden. Auf diese Weise weist das Magnetlager Notlaufeigenschaften auf, die bei Ausfall der Magnetlagerung größere Schäden vermeiden.

Gemäß einer bevorzugten Ausgestaltung ist der Wellenzapfen der Welle und/oder das Lagergehäuse mit einer Wolframkarbit- oder mit einer Keramikschicht versehen. Beide Beschichtungen gewähren eine hohe Säureresistenz und damit einen guten Schutz gegen Korrosion stark säureartiger Metallschmelzen, wie beispielsweise einer Zinkschmelze.

Vorzugsweise besteht der Wellenzapfen der Welle aus magnetischem Material, wobei das feststehende Lagerteil ein ein Magnetfeld erzeugendes Magnetelement aufweist, von dem der Wellenzapfen berührungslos in dem Lagerteil gehalten wird. Das Magnetelement kann von einem Elektromagneten gebildet werden. Elektromagneten haben den Vorteil, dass das erzeugte Magnetfeld in seiner Stärke gesteuert werden kann. Die Magnetfeldstärke kann also in Abhängigkeit von den auftretenden Belastungen, Drehzahlen etc. an die gegebenen Verhältnisse angepaßt werden. Auf diese Weise läßt sich der Spalt zwischen dem Wellenzapfen und dem Lagergehäuse über den gesamten Umfang weitgehend konstant halten.

Das Wellenlager ist vorzugsweise als Radiallager ausgebildet, wobei das bzw. die Magnetelemente radial des Wellenzapfens angeordnet sind. Ferner kann das Wellenlager zusätzlich auch als Axiallager ausgebildet sein, wobei ein Magnetelement axial des Wellenzapfens angeordnet ist. Auf diese Weise wird die Welle sowohl radial als auch axial berührungslos gelagert.

Gemäß einer bevorzugten Ausgestaltung sind Sensoren zur Ermittlung der radialen und/oder der axialen Position des Wellenzapfens in dem feststehenden Lagerteil vorgesehen. Eine Steuervorrichtung steuert die Stärke des von dem Magnetelement erzeugten Magnetfeldes in Abhängigkeit von der mit den Sensoren ermittelten Position des Zapfens in dem Lagerteil. Auf diese Weise wird der Spalt zwischen dem Lagergehäuse und dem Wellenzapfen konstant gehalten. Abweichungen der Spalthöhe können durch die Sensoren sofort festgestellt und durch entsprechende Steuerung der Magnetelemente ausgeglichen werden.

Vorzugsweise weist das Lagerteil mehrere Magnetelemente und der Wellenzapfen Polschuhe auf, wobei von den Magnetelementen ein Drehfeld erzeugt wird, das die Welle über die Polschuhe des Wellenzapfens antreibt. Alternativ kann die Welle auch als Kurzschluß-Läufer-Motor ausgebildet sein, wobei in der Welle in Längsrichtung mehrere isolierte Kupferleiter angeordnet und miteinander elektrisch verbunden sind. Die Welle wird dabei in der Regel mit einer Umfangsgeschwindigkeit angetrieben, die der Bandgeschwindigkeit des von der Welle geführten Metallbandes ungefähr entspricht. Auf diese Weise wird Schlupf zwischen dem Metallband und der Welle vermieden, wodurch wiederum die Beschichtung des Metallbandes mit dem Schmelzenmetall gleichmäßiger und fehlerfreier erfolgt.

Gemäß einer bevorzugten Ausgestaltung weist das Wellenlager eine Heizvorrichtung auf. Die Heizvorrichtung dient dazu, das Wellenlager auch nach Entnahme aus der Metallschmelze auf so hoher Temperatur zu halten, dass das Schmelzenmetall in dem umlaufenden Spalt zwischen dem Lagergehäuse und dem Wellenzapfen flüssig bleibt, bis der Wellenzapfen aus dem Lagergehäuse entfernt wird.

Gemäß einer bevorzugten Ausgestaltung weist das Lagerteil vier gleichmäßig über den Umfang verteilte Magnetelemente auf. Die Resultierende der auf die Welle wirkenden Kräfte beim Betrieb der Beschichtungsvorrichtung sollte genau zwischen zwei Magnetelementen, d.h. in 45° zu zwei Magnetelementen liegen. Die Welle wird durch die auf die Welle wirkenden Kräfte stets zwischen den Magnetelementen in einer stabilen Position gehalten. Es können auch mehr als vier Magnetelemente über den Umfang verteilt sein.

Im folgenden wird unter Bezugnahme auf die Zeichnungen ein Ausführungsbeispiel der Erfindung näher erläutert.

Es zeigen:
- Fig. 1: eine erfindungsgemäße Beschichtungsvorrichtung mit einer Umlenkwelle und einer Führungswelle in einer Zinkschmelze in Seitenansicht,
- Fig. 2: die Beschichtungsvorrichtung der Fig. 1 in Vorderansicht, und
- Fig. 3: ein Magnetlager der Umlenkwelle der Beschichtungsvorrichtung der Fign. 1 und 2 im Längsschnitt.

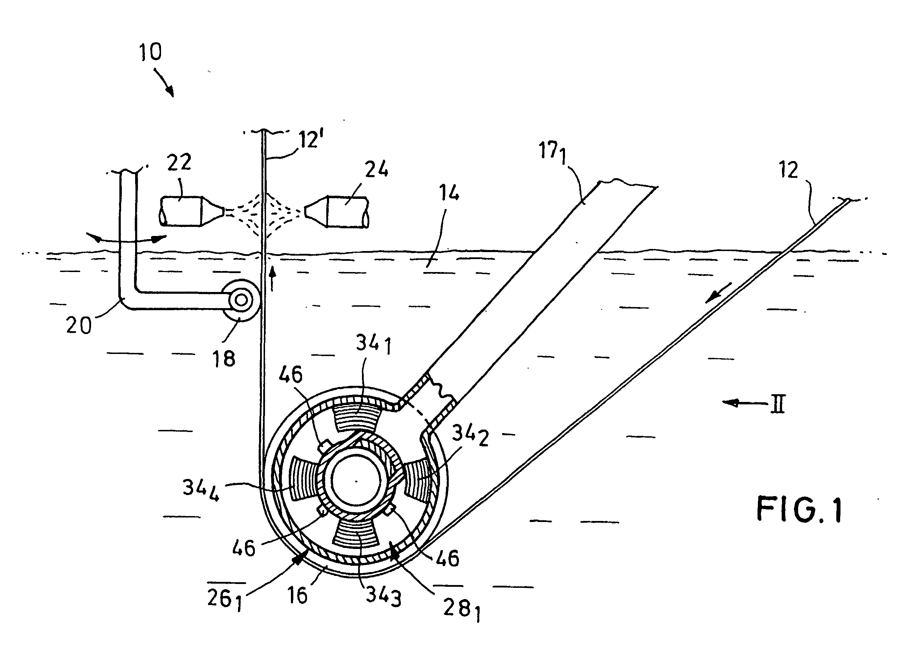

In Fig. 1 ist in Seitenansicht eine Beschichtungsvorrichtung 10 vereinfacht dargestellt. Ein Metallband 12 wird durch eine Schmelze 14 von Zink geleitet, um die Oberfläche des Metallbandes 12 mit einer dünnen Zinkschicht zu versehen. Die Zinkschmelze 14 hat eine Temperatur von 450° bis 470°C. Das Metallband 12 wird unter einem Winkel von 30° bis 45° zur Horizontalen in die Zinkschmelze eingeführt und in der Schmelze 14 durch eine erste drehbare Welle 16 nach oben umgelenkt, so dass das Metallband 12' senkrecht nach oben aus der Zinkschmelze 14 wieder herausgeführt wird. Der Umschlingungswinkel des Metallbandes 12,12' um die erste Welle 16 beträgt 120 bis 135°. Die Zugkraft des Metallbandes 14 beträgt zwischen 1,0 bis 5,0 t.

Eine zweite Welle 18 in der Zinkschmelze 14 liegt über die gesamte Breite an dem senkrecht aus der Zinkschmelze 14 herauslaufenden Metallband 12' an, um das horizontale Flattern des Metallbandes 12' zu dämpfen. Die zweite Welle 18 ist an einem beweglichen Führungsarm 20 aufgehängt, der schwenkbar gelagert ist und dessen Schwenkbewegung durch ein entsprechendes Dämpfungselement gedämpft wird. Ferner ist der Führungsarm 20 und damit auch die zweite Welle 18 in Richtung des Metallbandes 12' vorgespannt. Beide Wellen 16,18 sind in die Schmelze 14 eingetaucht.

Zu beiden Seiten des aus der Zinkschmelze 14 heraustretenden senkrecht verlaufenden Metallbandes 12' sind Gasdüsen 22,24 angeordnet, durch die ein Gasstrom auf beide Seiten des Metallbandes 12' aufgebracht wird. Durch den Gasstrom wird die flüssige Zinkschicht auf dem Metallband 12' auf eine bestimmte gleichbleibende Schichtdicke reduziert.

Die erste Welle 16 wird durch zwei Schwenkarme 17₁,17₂ in der Zinkschmelze 14 gehalten. Die Welle 16 ist zu Wartungs- und Reparaturzwecken zum Ausgleich des Verschleißes aus der Zinkschmelze 14 heraushebbar. Auch der Führungsarm 20 mit der Führungswelie 18 ist zu diesem Zweck aus der Schmelze 14 heraushebbar. Die Arme 17₁,17₂,20 werden mittels einer Wechseltraverse, an der sie befestigt sind, aus der Schmelze 14 herausgehoben.

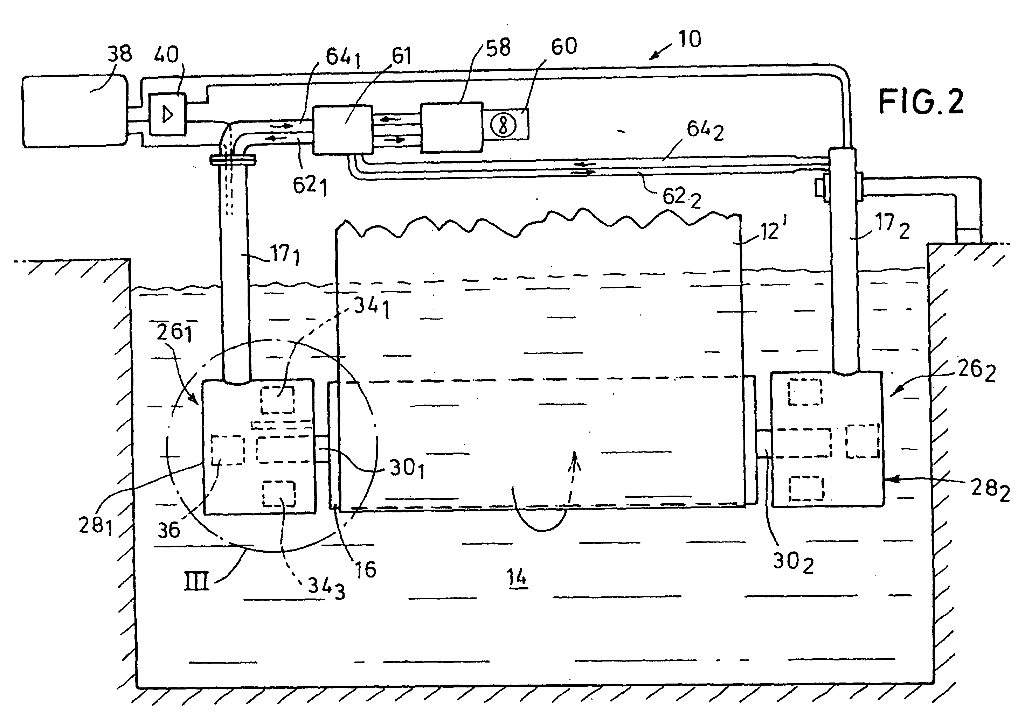

Wie u.a. in Fig. 2 erkennbar ist, sind an den beiden eingetauchten Enden der Schwenkarme 17₁ und 17₂ Wellenlager 26₁,26₂ vorgesehen, durch die die Umlenkwelle 16 drehbar an den Schwenkarmen 17₁, 17₂ gelagert ist. Bei den beiden Wellenlagern 26₁,26₂ handelt es sich um Magnetlager, die von einem gekapselten feststehenden Lagerteil 28₁,28₂ und aus zwei Wellenzapfen 30₁,30₂ der Welle 16 aus magnetischem Material, beispielsweise aus Werkzeugstahl, gebildet werden.

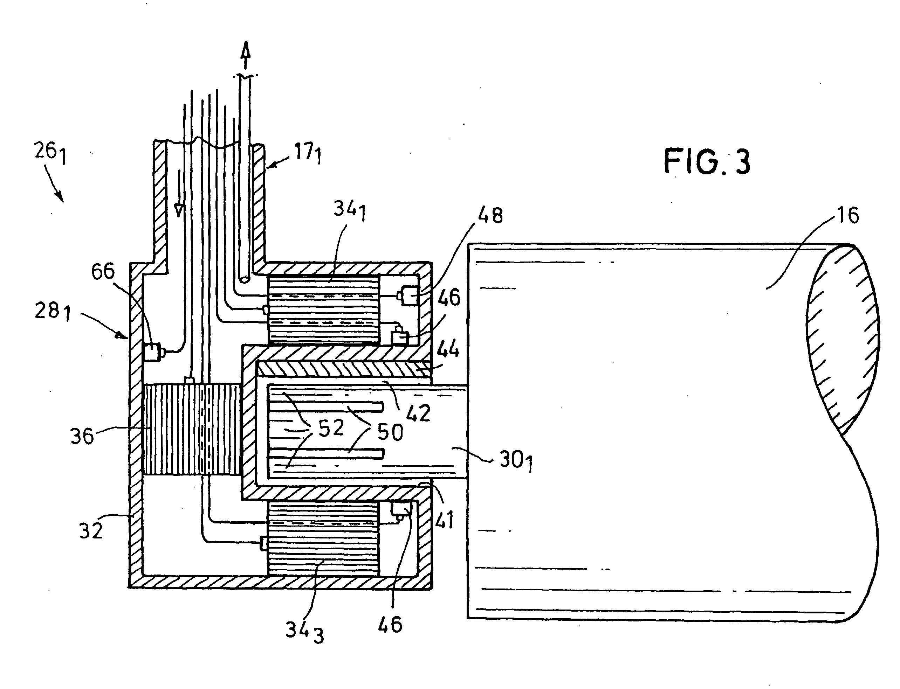

Wie in Fig. 3 zu erkennen ist, besteht das feststehende Lagerteil 28₁ aus einem flüssigkeitsdichten Lagergehäuse 32 aus einem nicht-magnetischen Material, beispielsweise aus Edelstahl, z.B. 1.4571 oder 1.4404. In dem Lagergehäuse 32 sind insgesamt fünf Elektromagnete 34₁-34₄,36 befestigt. Die vier radial des Wellenzapfens 30₁ angeordneten Elektromagnete 34₁-34₄ sind jeweils in 90° zueinander und in ungefähr 45° zur resultierenden aller auf die Welle 16 wirkenden Kräfte angeordnet.

Die Magnetelemente 34₁-34₄,36 werden durch eine elektronische Steuervorrichtung 38 und einen Verstärker 40 derart gesteuert, dass die Wellenzapfen 30₁,30₂ in dem von dem Lagergehäuse 32 eingeschlossenen kreiszylinderartigen Raum in der Schwebe gehalten werden. Zwischen dem Wellenzapfen 30₁ und dem Lagergehäuse 32 verbleibt ein umlaufender Spalt 42, der mit Zinkschmelze gefüllt ist. Da Zink ein nicht-magnetisches Metall ist, wird durch die Zinkschmelze in dem umlaufenden Spalt 42 das von den Elektromagneten 34₁-34₄,36 erzeugte Magnetfeld nicht beeinträchtigt.

In den zylinderartigen Ausnehmungen 41 des Lagergehäuses 32 ist in der oberen Hälfte ein Notlauf-Keramikeinsatz 44 befestigt, der bei Ausfall der Magnetelemente 34,36 verhindert, dass der Wellenzapfen 30₁ die aus Edelstahl bestehende Lagergehäusewand 32 abschleift und damit ein Eindringen der Zinkschmelze in das Lagergehäuse 32 ermöglicht. Der Notlauf-Keramikeinsatz kann auch becherartig ausgebildet sein und die gesamte Ausnehmung 41 ausfüllen.

In dem Lagergehäuse 32 sind mehrere Abstandssensoren 46,48 angeordnet, die die axiale und radiale Position des Wellenzapfens 30₁ bzw. der Welle 16 im Verhältnis zum Lagergehäuse 32 ermitteln. Die Sensoren 46,48 sind über elektrische Leitungen mit der Steuervorrichtung 38 verbunden, die die Sensorsignale auswertet und die Elektromagneten 34,36 entsprechend steuert.

Der Wellenzapfen 30₁ weist fünf radiale Nuten 50 auf, so dass in den erhabenen Bereichen fünf Polschuhe 52 gebildet werden. Durch die Steuervorrichtung wird über die radial angeordneten Elektromagneten 34 ein Drehfeld generiert, so dass ein Drehmoment auf den Wellenzapfen 30₁ übertragen und damit die Welle 16 in Drehung versetzt wird. Im Betrieb wird die Welle 16 mit ungefähr 25-200 Umdrehungen pro Minute angetrieben.

Wie in Fig. 2 dargestellt, weist die Beschichtungsvorrichtung 10 als Gasversorgung einen Gastank 58 mit einem Gaskühler 60 auf. Als Gas wird Stickstoff verwendet. Das gekühlte Stickstoff-Gas aus dem Gastank 58 wird durch eine Gaspumpe 61 und über entsprechende Gasleitungen 62₁,62₂ in die Lagergehäuse 28₁,28₂ gepumpt und über entsprechende Rückführgasleitungen 64₁,64₂ in den Gastank 58 zurückgeführt. Das Stickstoffgas kühlt in den Lagergehäusen im wesentlichen die Elektromagneten 34,36, um deren Wirkungsgrad zu verbessern.

Über einen Drucksensor 66 in dem Lagergehäuse 32 wird ständig der Gasinnendruck in dem Lagergehäuse 32 überwacht. Bei einem Druckabfall, beispielsweise durch eine Undichtigkeit des Lagergehäuses, wird sofort ein Alarm ausgelöst und daraufhin die Wellenlager 28₁,28₂ möglichst schnell aus dem Zinkbad herausgehoben. Das Stickstoffgas kann durch die Pumpe 61 im Druck so erhöht werden, dass das Stickstoffgas durch eine Undichtigkeit des Lagergehäuses nach außen dringt und dadurch das Eindringen von Zinkschmelze verhindert.

Im Bereich der becherartigen Ausnehmung 41 sind an dem Lagergehäuse 32 nicht dargestellte Heizelemente vorgesehen, die beim Herausschwenken der Wellenlager 26 aus der Zinkschmelze die Wellenlager 26₁,26₂ so lange warm halten, bis die Zinkschmelze aus den Ausnehmungen 41 herausgelaufen ist, bzw. bis die Wellenlager 26 demontiert sind.

In dem Spalt 42 kann vor Inbetriebnahme eine Metallbuchse aus einem Metall mit niedrigem Schmelzpunkt vorgesehen sein, die vor der Inbetriebnahme der Anlage auf den Wellenzapfen 30 aufgeschoben wird und den Spalt 42 zwischen dem Wellenzapfen 30₁ und dem Lagergehäuse 32 ausfüllt. Nach Inbetriebnahme der Anlage schmilzt die Buchse in der heißen Zinkschmelze, während die Elektromagneten 34 bereits in Betrieb sind. Mit Hilfe der Buchse ist der Wellenzapfen 30₁ bei Betriebsbeginn bereits in dem feststehenden Lagerteil 26₁,26₂ zentriert und schmilzt nach Inbetriebnahme, um den Spalt 42 zwischen Wellenzapfen 30₁ und Gehäuse 32 freizugeben.

Durch die berührungslose Ausbildung der Wellenlager 26₁,26₂ kann die Welle 16 trotz einer nennenswerten Längenausdehnung bei Erhitzung auch axial stets in der Mitte gehalten werden.

Auch die Führungsrolle 18 wird berührungslos durch entsprechende Magnetlager gelagert.

Durch die berührungslose Lagerung der Umlenkrolle 16 und der Führungsrolle 18 wird die Verwendung von preiswerten und säurebeständigen Materialien und Beschichtungen für alle Teile der Lagerung ermöglicht. Dadurch werden Wartungsintervalle von 4 Wochen und länger realisiert, wodurch wiederum die kostenintensiven Standzeiten erheblich verringert werden. Die Magnetlager lassen sich nur zur Beschichtung mit nicht magnetischen Metallen verwenden.

## Patentansprüche

1. Beschichtungsvorrichtung zum Beschichten eines Metallbandes (12) in einer Schmelze (14) eines nicht-magnetischen Metalles, mit
einer in der Schmelze (14) drehbaren Welle (16) zum Führen des Metallbandes (12), und
mindestens einem Wellenlager (26₁,26₂) zur Lagerung der Welle (16),
**dadurch gekennzeichnet,**
**dass** das Wellenlager (26₁,26₂) ein Magnetlager ist, dessen feststehendes Lagerteil (28₁,28₂) gekapselt ist.

2. Beschichtungsvorrichtung nach Anspruch 1, **dadurch gekennzeichnet, dass** als Kapselung des feststehenden Lagerteils (28₁,28₂) ein Lagergehäuse (32) aus nicht-magnetischem und hochtemperaturbeständigem Material vorgesehen ist, dessen Schmelzpunkt über 600°C liegt.

3. Beschichtungsvorrichtung nach Anspruch 1 oder 2, **dadurch gekennzeichnet, dass** eine Gasversorgung (58-64) vorgesehen ist, mit der das Lagergehäuse (32) mit Kühlgas zur Kühlung der Magnetelemente (34₁-34₄,36) des feststehenden Lagerteils (28₁,28₂) versorgt wird.

4. Beschichtungsvorrichtung nach Anspruch 3, **dadurch gekennzeichnet, dass** in dem Lagergehäuse (32) ein Gasdrucksensor (66) zur Feststellung von Gasleckströmen vorgesehen ist.

5. Beschichtungsvorrichtung nach einem der Ansprüche 1-4, **dadurch gekennzeichnet, dass** das Wellenlager (26₁,26₂) einen Notlauf-Keramikeinsatz (44) aufweist.

6. Beschichtungsvorrichtung nach einem der Ansprüche 1-5, **dadurch gekennzeichnet, dass** der Wellenzapfen (30₁,30₂) der Welle (16) und/oder das Lagergehäuse (32) mit einer Wolframkarbit- oder mit einer Keramikbeschichtung versehen sind.

7. Beschichtungsvorrichtung nach einem der Ansprüche 1-6, **dadurch gekennzeichnet, dass** der Wellenzapfen (30₁,30₂) der Welle (16) aus magnetischem Material besteht und dass das feststehende Lagerteil (28₁,28₂) ein ein Magnetfeld erzeugendes Magnetelement (34₁-34₄,36) aufweist, von dem der Wellenzapfen (30₁,30₂) berührungslos in dem feststehenden Lagerteil (28₁,28₂) gehalten wird.

8. Beschichtungsvorrichtung nach Anspruch 7, **dadurch gekennzeichnet, dass** das Magnetelement (34₁-34₄,36) ein Elektromagnet ist.

9. Beschichtungsvorrichtung nach Anspruch 7 oder 8, **dadurch gekennzeichnet, dass** das Wellenlager (26₁,26₂) ein Radiallager (26₁,26₂) ist, wobei das Magnetelement (36) radial des Wellenzapfens (30₁,30₂)angeordnet ist.

10. Beschichtungsvorrichtung nach einem der Ansprüche 7-9, **dadurch gekennzeichnet, dass** das Wellenlager (26₁,26₂) ein Axiallager ist, wobei das Magnetelement (36) axial des Wellenzapfens (30₁,30₂) angeordnet ist.

11. Beschichtungsvorrichtung nach einem der Ansprüche 7-10, **dadurch gekennzeichnet, dass** Sensoren (46,48) zur Ermittlung der radialen und/oder der axialen Position des Wellenzapfens (30₁,30₂) in dem feststehenden Lagerteil (28₁,28₂) vorgesehen sind, und dass eine Steuervorrichtung (38) vorgesehen ist, die die Stärke des von dem Magnetelement (34₁-34₄,36) erzeugten Magnetfeldes in Abhängigkeit von der mit den Sensoren (46,48) ermittelten Position des Zapfens (30₁,30₂) in dem feststehenden Lagerteil (28₁,28₂) steuert.

12. Beschichtungsvorrichtung nach einem der Ansprüche 7-11, **dadurch gekennzeichnet, dass** das feststehende Lagerteil (28₁,28₂) mehrere radiale Magnetelemente (34₁-34₄) und der Wellenzapfen Polschuhe (52) aufweist und dass von den Magnetelementen (34₁-34₄) ein Drehfeld erzeugt wird, das die Welle (16) über den Wellenzapfen (30₁,30₂) antreibt.

13. Beschichtungsvorrichtung nach einem der Ansprüche 1-12, **dadurch gekennzeichnet, dass** das Wellenlager eine Heizvorrichtung zum Heizen des Wellenlagers aufweist.

14. Beschichtungsvorrichtung nach einem der Ansprüche 7-13, **dadurch gekennzeichnet, dass** das feststehende Lagerteil mindestens (28₁,28₂) vier gleichmäßig über den Umfang verteilte Magnetelemente (34₁-34₄) aufweist.

15. Beschichtungsvorrichtung nach einem der Ansprüche 1-14, **dadurch gekennzeichnet, dass** die Welle (16) eine Tauchrolle in einer Zinkschmelze (14) ist.

## Claims

1. A coating device for coating a metal band (12) in a melt of a non-magnetic metal, comprising
- a shaft (16) rotatable in the melt (14) forguiding the metal band (12), and
- at least one shaft bearing (26^, 262) for supporting the shaft (16),
**characterized in that**
- the shaft bearing (26₁, 26₂) is a magnetic bearing whose stationary bearing portion (28₁, 28₂) is encapsulated.

2. The coating device of claim 1, **characterized in that** the capsule of the stationary bearing portion (28₁, 28₂) is a bearing housing (32) of non-magnetic and high-temperature resistant material with a melting point above 600°C.

3. The coating device of claim 1 or 2, **characterized in that** a gas supply (58-64) is provided by which the bearing housing (32) is supplied with cooling gas for cooling the magnetic elements (34₁-34₄, 36) of the stationary bearing portion (28₁, 28₂).

4. The coating device of claim 3, **characterized in that** the bearing housing (32) accommodates a gas pressure sensor (66) for detecting gas leakage flows.

5. The coating device of one of claims 1-4, **characterized in that** the shaft bearing (26i, 263) comprises a ceramic emergency running insert (44).

6. The coating device of one of claims 1-5, **characterized in that** the shaft stub (30₁, 30₂) of the shaft (16) and/or the bearing housing (32) are provided with a tungsten carbide or a ceramics coating.

7. The coating device of one of claims 1-6, **characterized in that** the shaft stub (30₁, 30₂) ofthe shaft (16) is made ofmagnetic material and that the stationary bearing portion (28₁, 28₂) comprises a magnetic element (34₁-34₄, 36) generating a magnetic field by which the shaft stub (30₁, 30₂) is contactlessly held in the stationary bearing portion (28₁, 28₂).

8. The coating device of claim 7, **characterized in that** the magnetic element (34₁-34₄, 36) is a solenoid.

9. The coating device of claim 7 or 8, **characterized in that** the shaft bearing (26₁, 26₂) is a radial bearing (26₁, 26₂), the magnetic element (36) being disposed radially of the shaft stub (30₁, 30₂).

10. The coating device of one of claims 7-9, **characterized in that** the shaft bearing (26₁, 26₂) is an axial bearing, the magnetic element (36) is disposed axially of the shaft stub (30₁, 30₂).

11. The coating device of one of claims 7-10, **characterized in that** sensors (46,48) for detecting the radial and/or axial positions of the shaft stub (30₁, 30₂) are provided in the stationary bearing portion (28₁, 28₂) and that a control device (38) is provided that controls the magnitude of the magnetic field generated by the magnetic element (34₁-34₄, 36) depending on the position ofthe stub (30₁, 30₂) in the stationary bearing portion (28₁, 28₂) detected by the sensors (46, 48).

12. The coating device of one of claims 7-11, **characterized in that** the stationary bearing portion (28₁, 28₂) comprises a plurality of radial magnetic elements (34₁-34₄) and the shaft stub comprises pole shoes (52) and that the magnetic elements (34₁- 34₄) generate a rotary field that drives the shaft (16) through the shaft stub (30₁, 30₂).

13. The coating device ofone of claims 1-12, **characterized in that** the shaft bearing comprises a heating device for heating the shaft bearing.

14. The coating device of one of claims 7-13, **characterized in that** the stationary bearing portion (28₁, 28₂) comprises at least four magnetic elements (34₁-34₄) equally distributed over the circumference.

15. The coating device ofone of claims 1-14, **characterized in that** the shaft (16) is an immersed roller in a zinc melt (14).

## Revendications

1. Dispositif de revêtement pour le revêtement d'un ruban métallique (12) dans un bain (14) d'un métal fondu amagnétique, avec
un arbre (16) pouvant tourner dans le bain (14) pour guider le ruban métallique (12), et
au moins un palier d'arbre (26₁,26₂) pour le logement de l'arbre (16),
**caractérisé en ce que**,
le palier d'arbre (26₁,26₂) est un palier magnétique dont la partie de palier fixe (28₁,28₂) est enveloppée.

2. Dispositif de revêtement selon la revendication 1, **caractérisé en ce qu'**il est prévu, comme enveloppement de la partie de palier fixe (28₁,28₂) un carter de palier (32) en matériau amagnétique et résistant aux températures élevées, dont le point de fusion est supérieur à 600°C.

3. Dispositif de revêtement selon la revendication 1 ou 2, **caractérisé en ce qu'**il est prévu une alimentation en gaz (58-64) avec laquelle le carter de palier (32) est alimenté par un gaz de refroidissement pour le refroidissement des éléments magnétiques (34₁ - 34₄, 36) de la partie de palier fixe (28₁, 28₂).

4. Dispositif de revêtement selon la revendication 3, **caractérisé en ce qu'**il est prévu, dans le carter de palier (32), un capteur de pression de gaz (66) pour le décèlement de courants de fuites de gaz.

5. Dispositif de revêtement selon l'une quelconque des revendications 1 à 4, **caractérisé en ce que** le palier d'arbre (26₁, 26₂) comporte une garniture en céramique de fonctionnement de secours (44).

6. Dispositif de revêtement selon l'une quelconque des revendications 1 à 5, **caractérisé en ce que** les tourillons (30₁, 30₂) de l'arbre (16) et/ou le carter de palier (32) est (sont) pourvu(s) d'un revêtement en carbure de tungstène ou en céramique.

7. Dispositif de revêtement selon l'une quelconque des revendications 1 à 6, **caractérisé en ce que** les tourillons (30₁, 30₂) de l'arbre (16) sont constitués de matériau magnétique et que la partie de palier fixe (28₁, 28₂) comporte un élément magnétique (34₁, 34₄, 36) générant un champ magnétique, duquel les tourillons (30₁, 30₂) sont maintenus sans contact dans la partie de palier fixe (28₁, 28₂).

8. Dispositif de revêtement selon la revendication 7, **caractérisé en ce que** l'élément magnétique (34₁, 34₄, 36) est un électro-aimant.

9. Dispositif de revêtement selon la revendication 7 ou 8, **caractérisé en ce que** le palier (26₁, 26₂) de l'arbre est un palier radial, l'élément magnétique (36) étant disposé radialement par rapport aux tourillons (30₁, 30₂).

10. Dispositif de revêtement selon l'une quelconque des revendications 7 à 9, **caractérisé en ce que** le palier (26₁, 26₂) est un palier axial, l'élément magnétique (36) étant disposé axialement par rapport aux tourillons (30₁, 30₂).

11. Dispositif de revêtement selon l'une quelconque des revendications 7 à 10, **caractérisé en ce que** des capteurs (46, 48) sont prévus dans la partie de palier fixe (28₁, 28₂) pour déterminer la position axiale et/ou radiale des tourillons (30₁, 30₂) et qu'il est prévu un dispositif de commande (38) qui commande la force du champ magnétique produit par l'élément magnétique (34₁, 34₄, 36) en fonction de la position déterminée avec les capteurs (46, 48) des tourillons (30₁, 30₂) dans la partie de palier fixe (28₁, 28₂).

12. Dispositif de revêtement selon l'une quelconque des revendications 7 à 11, **caractérisé en ce que** la partie de palier fixe (28₁, 28₂) comporte plusieurs éléments magnétiques radiaux (34₁-34₄), que le tourillon comporte les pièces polaires (52), et que se trouve produit par les éléments magnétiques (34₁-34₄) un champ tournant qui entraîne l'arbre (16) par l'intermédiaire des tourillons (30₁, 30₂).

13. Dispositif de revêtement selon l'une quelconque des revendications 1 à 12, **caractérisé en ce que** le palier de l'arbre comporte un dispositif de chauffage pour le chauffage de ce dernier.

14. Dispositif de revêtement selon l'une quelconque des revendications 7 à 13, **caractérisé en ce que** la partie de palier fixe (28₁, 28₂) comporte au moins quatre éléments magnétiques (34₁-34₄) répartis régulièrement sur la périphérie.

15. Dispositif de revêtement selon l'une quelconque des revendications 1 à 14, **caractérisé en ce que** l'arbre (16) est un cyclindre immersible dans un bain de zinc (14).
